# EUROPÄISCHE PATENTSCHRIFT

(11) **EP 0 989 076 B1**
(45) Veröffentlichungstag und Bekanntmachung des Hinweises auf die Patenterteilung: **06.08.2003**
(21) Anmeldenummer: 99115570.6
(22) Anmeldetag: 06.08.1999
(51) Int. Cl.: B65G 13/02, B65G 13/11

(54) **Rollenförderbahn**
Roller-conveyor
Transporteur à rouleau

(30) Priorität: 11.09.1998 DE 19841608
(43) Veröffentlichungstag der Anmeldung: 29.03.2000
(73) Patentinhaber: AXMANN-FÖRDERTECHNIK GMBH, D-74889 Sinsheim (DE)
(72) Erfinder: Axmann, Norbert, 74889 Sinsheim-Ho. (DE); Fessenbecker, Manfred, 74889 Sinsheim-Rohrbach (DE)
(74) Vertreter: Geitz, Holger

(56) Entgegenhaltungen:
- DE-A- 2 037 627
- DE-A- 3 215 921
- DE-A- 4 333 518
- DE-A- 19 547 893
- GB-A- 461 933
- GB-A- 1 046 453
- GB-A- 1 534 643
- US-A- 3 598 225

## Beschreibung

Die Erfindung bezieht sich auf eine Rollenförderbahn mit im Abstand voneinander verlaufenden Seitenwangen und zwischen diesen in Förderrichtung aufeinanderfolgend angeordneten Rollen, die beidendig mittels sich stirnseitig in letztere hineinerstreckender Lagerzapfen drehbar gelagert und motorisch angetrieben sind.

Rollenförderbahnen dieser Art, die allgemein bekannt sind, haben in der Regel sogenannte Trommelantriebe, die innerhalb der rohrförmig ausgebildeten Rollen des Förderers angeordnet sind und die Antriebsbewegung über einen kraftschlüssigen Reibantrieb auf die jeweilige Rolle übertragen. Derartige Trommelantriebe bestehen aus einem Gleichstrommotor und einem Getriebe. Das beim Antrieb der Rollen auftretende Gegendrehmoment wird über eine Vierkantoder eine Sechskantwelle in eine der Seitenwangen des Förderers eingeleitet und dort aufgenommen. Die Stromzuführung erfolgt über eine Hohlwelle, durch die sich das erforderliche Versorgungskabel von außen in das Innere des Motors hindurcherstreckt.

Der Vorteil derartiger Trommelantriebe besteht darin, daß die Antriebe platzsparend innerhalb der angetriebenen Rollen aufgenommen sind. Unbefriedigend ist jedoch, daß angesichts der nur begrenzten Rollendurchmesser mit beispielsweise einer lichten Innenweite von 50 mm nur kleine Motorleistungen installierbar sind. Dies umso mehr, als aus Sicherheitsgründen zumeist nur für 24 V Gleichstrom ausgelegte Motore eingesetzt werden können.

Eine gattungsgemäße Rollenförderbahn, bei der wenigstens eine Rolle mit einem außerhalb der eigentlichen Rollenbahn an einer Seitenwange angeordneten Antriebsmotor über ein Getriebe in Antriebsverbindung steht, ist aus der US 3,598,225 A bekannt. Dabei ist das Getriebe als Riemengetriebe ausgebildet, über das ein zwischen den Seitenwangen und im wesentlichen unterhalb der Rollen angeordnetes Friktionsrad angetrieben ist, das auf einer zwischen den Seitenwangen angeordneten und dort gelagerten Welle aufgenommen ist. Dem Friktionsrad ist ein zweites, in Förderrichtung beabstandetes Friktionsrad zugeordnet, wobei um die Friktionsräder ein Antriebsgurt derart gespannt geführt ist, daß dieser an der Unterseite der Rollen angreift und einen Friktionsantrieb der Rollen ermöglicht. Diese Konstruktion ist aufwendig. Ein einfacher Austausch der angetriebenen Rollen ist nicht möglich.

Die GB 1 534 643 A offenbart eine direkt von einem Motor über ein Getriebe angetriebene Rolle eines Rollentisches. Die Rolle ist beidseitig mittels sich stirnseitig in diese hineinerstreckende Lagerzapfen drehbar gelagert, wobei der die Rolle antriebsseitig lagernde Lagerzapfen eine Ausgangswelle des Getriebes bildet, und wobei der Motor auf der von der Rolle abgewandten Seite einer Seitenwange angeordnet ist. Die Rolle ist fest mit den Lagerzapfen verbunden. Zum Lösen der aus dem Motor und dem Getriebe gebildeten Einheit von dem Lagerzapfen der verbleibenden Rolle, müssen die Verschraubungen eines als Aufpreßkupplung gestalteten Doppelringes gelöst werden. Durch diesen ist im montierten Zustand unter radialer Deformation der Antriebshohlwelle des Getriebemotors eine Aufpreßverbindung mit dem antriebsseitigen Lagerzapfen der Rolle geschaffen. Ein Ausgleich von Winkel- und/oder Axialfehlern und eine Demontage und Wiedermontage der angetriebenen Rolle, ohne daß dafür der Antriebsmotor und/oder das Getriebe demontiert werden müßten, ist nicht möglich.

Die DE 32 15 921 A offenbart einen Rollenförderer, bei dem jede Rolle individuell mit einem eigenen Antriebsmotor antreibbar ist, wobei diese Rollen jeweils außerhalb der eigentlichen Rollenbahn an einer Seitenwange angeordnet sind. Die Rotoren der jeweiligen Antriebsmotoren sind unmittelbar auf den mit den antriebsseitigen Rollen drehfest verbundenen Wellen aufgenommen und die zugeordneten Statoren sind mit der Seitenwange fest verbunden. Diese Konstruktion erfordert den Einsatz ganz bestimmter Elektromotoren und ermöglicht nur begrenzte, schlupfbestimmte Antriebsleistungen. Eine einfache Demontage und erneute Montage der Antriebsrollen ist nicht möglich.

Demgemäß ist es eine Aufgabe der Erfindung, eine verbesserte Rollenförderbahn der eingangs genannten Art zu schaffen, bei der die Antriebsleistungen ohne Begrenzung durch den Durchmesser der Rollen installierbar und Antriebsmotoren beliebiger Art und Betriebsspannung einsetzbar sind, bei der die angetriebene Rolle einfach ersetzbar ist und bei der auch bei etwaigen Montagefehlern eine präzise Lagerung der angetriebenen Rolle ermöglicht ist.

Gelöst ist diese Erfindungsaufgabe dadurch, daß bei der Rollenförderbahn nach dem Oberbegriff des Patentanspruchs 1 es sich bei dem die angetriebene Rolle antriebsseitig lagernden Lagerzapfen um eine stirnendig in die Rolle hineinragende und mit dieser drehfest verbundene Ausgangswelle des Getriebes handelt, und daß die Antriebsverbindung zwischen dem Getriebe und der angetriebenen Rolle eine Winkelund/oder Axialfehler ausgleichende Kupplung umfaßt.

Bei der erfindungsgemäßen Rollenförderbahn ist mithin der Antriebsmotor, und gegebenenfalls auch das Getriebe, außerhalb der angetriebenen Rolle an der antriebsseitigen Seitenwange angeordnet, womit die Begrenzung der Baugröße des Antriebsmotors und der Motorleistung entfallen ist. Es können vielmehr Antriebsmotoren beliebiger Art und Größe außenseitig an der genannten Seitenwange installiert und deren Antriebsleistung über ein zwischengeschaltetes Getriebe auf die anzutreibende Rolle übertragen werden.

Dadurch, daß es sich bei dem die Rolle antriebsseitig lagernden Lagerzapfen um eine stirnendig in die Rolle hineinragende und mit dieser drehfest verbundenen Ausgangswelle des Getriebes handelt, die sich durch eine Ausnehmung in der genannten Seitenwange hindurcherstreckt, übernimmt somit die Getriebe-Ausgangswelle die antriebsseitige Lagerung der angetriebenen Rolle, wofür es bei herkömmlichen Rollenförderbahnen eines besonderen Lagers bedarf, das beispielsweise auf der zu der Rolle hinweisenden Seite der antriebsseitigen Seitenwange angeordnet ist.

Durch die Erfindung ist eine Rollenförderbahn geschaffen worden, bei der handelsübliche Motoren und Getriebe, und zwar insbesondere Getriebemotoren, einsetzbar und dadurch nahezu unbegrenzte Variationen hinsichtlich Drehzahl und Drehmoment realisierbar sind. Angesichts der Anordnung des Antriebs außerhalb der eigentlichen Rollenbahn ist der Förderer für Reinräume, Naßräume und dergleichen geeignet. Die von der eigentlichen Rollenbahn abseitige Anordnung des Antriebs ermöglicht auch die gekapselte Unterbringung des Motors und Getriebes sowie eine geschützte Zuführung der elektrischen Anschlüsse. Dies gewährleistet einen hohen Sicherheitsstandard.

Die Drehmomentübertragung von einer Antriebswelle auf die angetriebene Rolle über eine Ausgleichskupplung ermöglicht neben einer formschlüssigen Kraftübertragung in vorgegebenen Grenzen Pendelbewegungen der Rolle in alle Richtungen, so daß Montagefehler unmittelbar ausgeglichen werden. Darüber hinaus ermöglicht der Einsatz einer derartigen Kupplung in einfacher Weise eine Demontage und Wiedermontage der angetriebenen Rolle, ohne daß dafür der Antriebsmotor und/oder das Getriebe demontiert werden müßten.

Die Kupplung besteht zweckmäßigerweise aus einer dreh- und axialfest am antriebsseitigen Stirnende in der Rolle aufgenommenen Kupplungshülse, die mit einer Innenverzahnung versehen ist, und aus einem mit dem antriebsseitigen Lagerzapfen, etwa der Getriebe-Ausgangswelle, dreh- und axialfest verbundenen Nabenteil, das eine in die Innenverzahnung der Kupplungshülse formschlüssig eingreifende Außenverzahnung besitzt.

Eine derartige Kupplung ermöglicht im Bedarfsfalle in einfacher Weise einen Austausch der angetriebenen Rolle, ohne daß es dafür einer Demontage und Wiedermontage des Getriebes und/oder des Antriebsmotors bedarf, und vermittelt eine besonders präzise antriebsseitige Rollenlagerung, wenn das Nabenteil der Kupplung auf der vom Getriebe vorstehenden Ausgangswelle aufgenommen ist.

Die äußere Kupplungshülse kann in beliebiger Weise mit der angetriebenen Rolle dreh- und axialfest verbunden sein. Als besonders einfach und somit kostengünstig hat sich jedoch das stirnendige Einpressen der Kupplungshülse in die rohrartig ausgebildete Rolle erwiesen.

Im Interesse eines besonders guten Ausgleichs etwaiger Fluchtungsfehler zwischen dem antriebsseitigen Lagerzapfen und der Drehachse der angetriebenen Rolle ist, gemäß einer abermaligen Weiterbildung, die Außenverzahnung des Nabenteils der Kupplung ballig ausgebildet. Darüber hinaus sollte die Axialerstreckung des Nabenteils kleiner sein als die Axialerstreckung der Kupplungshülse, so daß innerhalb vorgegebener Grenzen auch ein gewisser Ausgleich von Axialfehlern möglich ist.

Eine Weiterbildung der Erfindung sieht vor, daß die antriebsseitige Seitenwange als nach der von den Rollen wegweisenden Seite offenes Kastenprofil ausgebildet ist und daß der Antriebsmotor und das Getriebe innerhalb des Kastenprofils aufgenommen sind, also seitlich nicht von der Rollenförderbahn vorstehen.

Zweckmäßigerweise ist die Offenseite der als Kastenprofil ausgebildeten Seitenwange mittels einer äußeren Abdeckung verschlossen und demgemäß sind bei dieser Weiterbildung der Antriebsmotor und das Getriebe in einem nach außen gekapselten Raum aufgenommen.

Eines besonders kompakte Bauweise ergibt sich, wenn gemäß einer anderen Weiterbildung der Antriebsmotor und das Getriebe zu einem Getriebemotor zusammengefaßt sind, der in geeigneter Weise auf der von den Rollen abgewandten Seite einer Seitenwange der Rollenförderbahn angebracht ist.

Bei der erfindungsgemäßen Rollenförderbahn stehen mit der motorisch direkt angetriebenen Rolle die motorisch nicht unmittelbar angetriebenen Rollen über Umschlingungstriebe in Antriebsverbindung. Insoweit weisen die Rollen in der Nähe eines Stirnendes jeweils zwei umlaufende und axial voneinander beabstandete Sicken auf, in den Rundriemen, Zahnriemen oder ähnliche bekannte Antriebsmittel eine Drehverbindung zur jeweils benachbarten Rolle vermitteln. Zweckmäßigerweise ist diese an sich bekannte Drehverbindung der Rollen auf der vom Antrieb abgewandten Seite angeordnet.

Anhand der beigefügten Zeichnungen soll nachstehend eine Ausführungsform der Erfindung erläutert werden. In schematischen Ansichten zeigen:
- Fig. 1: eine Draufsicht auf eine als Winkelförderer ausgebildete Rollenförderbahn mit konischen und jeweils über einen Umschlingungstrieb miteinander in Antriebsverbindung stehenden Rollen,
- Fig. 2: in einem Querschnitt gemäß der Schnittlinie II-II in Fig. 1 durch die Rollenförderbahn den Antrieb einer Rolle mittels eines an einer Seitenwange angeordneten Getriebemotors,
- Fig. 3: in spiegelbildlicher Darstellung zu Fig. 2 eine vergrößerte Ausschnittansicht des Rollenantriebs mittels des Getriebemotors über eine der angetriebenen Rolle stirnendig zugeordnete Kupplung,
- Fig. 4: eine mit einer Innenverzahnung versehene äußere Kupplungshülse und
- Fig. 5: ein mit einer balligen Außenverzahnung ausgerüstetes Nabenteil der Kupplung.

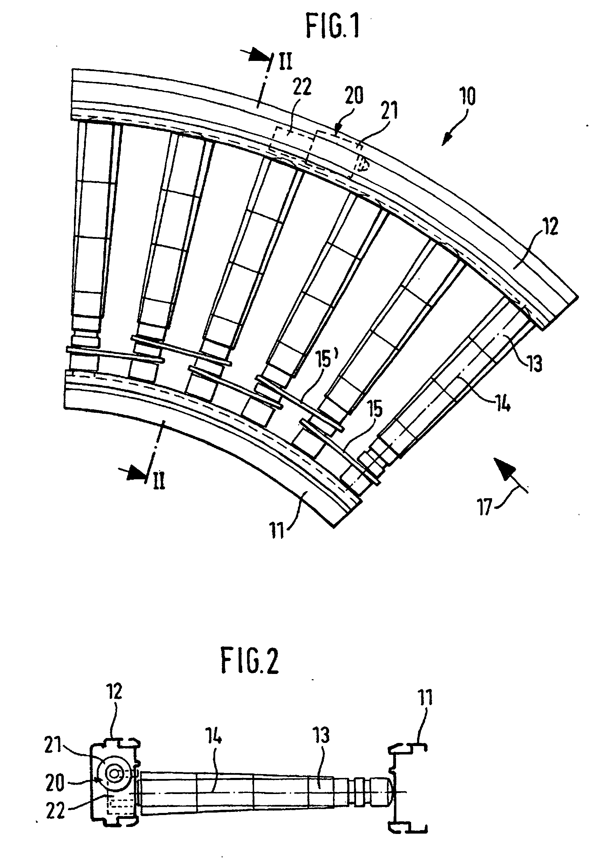

Bei der in Fig. 1 in einer Draufsicht veranschaulichten Rollenförderbahn 10 handelt es sich um einen Winkelförderer mit je einer inneren und äußeren Seitenwange 11, 12, zwischen denen in Förderbahnlängsrichtung voneinander beabstandet konisch und rohrförmig ausgebildete Rollen 13 drehbar gelagert sind. Die Rollen 13 sind so angeordnet, daß die Rollen- Drehachsen 14 sich in einem jenseits der inneren Seitenwange 11 liegenden Zentrum schneiden. Die Rollen 13 stehen jeweils über einen in der Nähe der inneren Seitenwange 11 angeordneten Umschlingungstrieb 15, 15' in Antriebsverbindung. Bei diesen Umschlingungstrieben handelt es sich um Rundriementriebe mit jeweils einem in einer axial beanstandet von einem Stirnende der Rolle 13 eingeprägten Sicke 16, 16' geführten Rundriemen. Die Förderrichtung der Rollenförderbahn 10 deutet der Pfeil 17 an.

Einer der Rollen 13 ist als Direktantrieb ein Getriebemotor 20 zugeordnet, der aus einem Antriebsmotor 21 und einem Getriebe 22 besteht. Der Getriebemotor 20 ist, wie insbesondere Fig. 2 zeigt, auf der von der angetriebenen Rolle 13 abgewandten Seite der äußeren Seitenwange 12 mittels Schrauben 23 befestigt und derart angeordnet, daß sich eine Abtriebswelle 24 des Getriebes 22 durch die Seitenwange 12 hindurcherstreckt und stirnendig in die angetriebene Rolle 13 vorsteht. Die Antriebsverbindung zwischen der Getriebe-Abtriebswelle 24 und der angetriebenen Rolle 13 vermittelt eine Kupplung 25, die auf der zum Getriebe 21 hinweisenden Seite stirnendig in der genannten Rolle 13 aufgenommen ist.

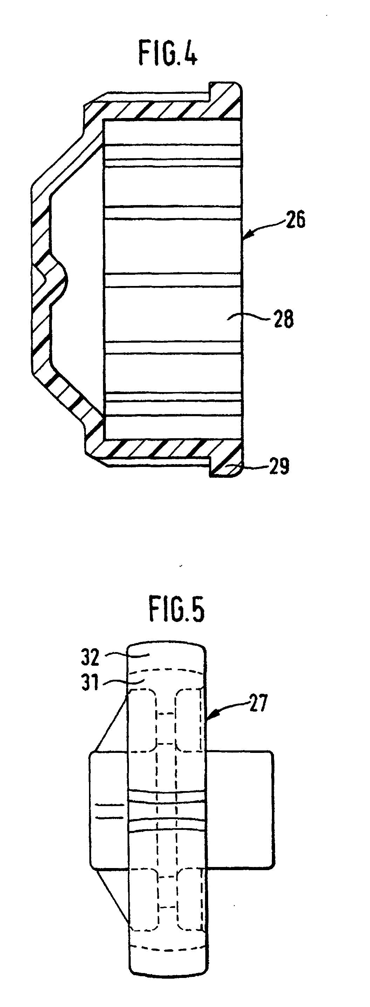

Die Kupplung 25 umfaßt eine äußere Kupplungshülse 26 und ein inneres Nabenteil 27, die in den Fig. 4 und 5 jeweils für sich allein dargestellt sind. Bei der Kupplungshülse und dem Nabenteil handelt es sich um Kunststoff-Formteile.

Die Kupplungshülse 26, die topfartig ausgebildet ist und eine Innenverzahnung 28 sowie am offenseitigen Ende einen umlaufenden Randflansch 29 besitzt, ist in die angetriebene Rolle 13 von deren zum Getriebe 22 hinweisenden Stirnende dreh- und axialfest derart eingepreßt, daß der umlaufende Randflansch 29 auf dem zum Getriebe 22 hinweisenden Stirnende der Rolle 13 aufsitzt.

Das Nabenteil 27 ist mit einem eine entsprechende Axialausnehmung aufweisenden Nabenabschnitt auf der sich durch die äußere Seitenwange 12 hindurcherstreckenden und in das Stirnende der Rolle 13 vorstehenden Abtriebswelle 24 des Getriebes 22 aufgenommen und mit dieser Abtriebswelle in bekannter Weise dreh- und axialfest verbunden. Beispielsweise kann die drehfeste Verbindung eine Mitnahmefeder 30 vermitteln, die in entsprechend in die Abtriebswelle 24 und die Ausnehmung im Nabenabschnitt eingestochene Längsnuten eingelegt ist. Radial vom Nabenabschnitt des Nabenteils 27 steht konzentrisch zu diesem ein Mitnahmeabschnitt 31 mit einer ballig ausgebildeten Außenverzahnung 32 vor.

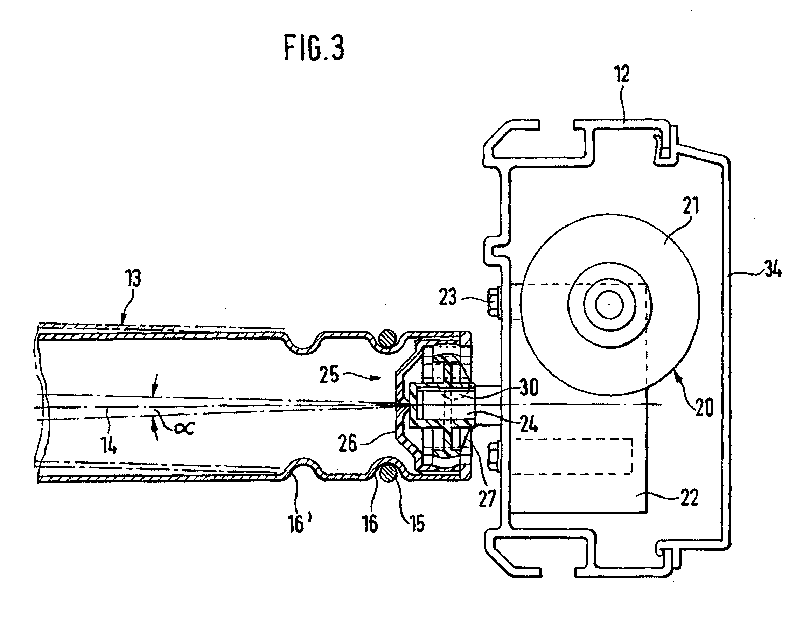

Das Nabenteil 27 ist innerhalb der stirnendig in die angetriebene Rolle 13 eingepreßten Kupplungshülse 26 derart aufgenommen, daß die ballig ausgebildete Außenverzahnung 32 des Mitnehmerabschnitts 31 in die Innenverzahnung 28 der Kupplungshülse 26 eingreift. Die ballige Ausbildung der Außenverzahnung 32 des Nabenteils 27 ermöglicht problemlos den Ausgleich von Fluchtungsfehlern zwischen der Abtriebswelle 24 des Getriebes und der Drehachse 14 der angetriebenen Rolle 13. In Fig. 3 ist ein denkbarer Fluchtungsfehler zwischen der Abtriebswelle 24 des Getriebes 21 und der Drehachse 14 der Rolle 13 als Winkel angedeutet. Die Axialerstreckung des Nabenteils 27 ist kleiner als die Tiefe der Kupplungshülse 26, so daß neben dem Ausgleich von Fluchtungsfehlern auch innerhalb vorgegebener Grenzen Axialfehler ausgleichbar sind, indem der sich konzentrisch um den Nabenabschnitt herumerstreckende Mitnehmerabschnitt 31 mit der ballig ausgebildeten Außenverzahnung 32 mit axialem Spiel innerhalb der Innenverzahnung der Kupplungshülse 26 aufgenommen ist.

Zumindest die äußere Seitenwange 12 der Rollenförderbahn 10 ist als nach der von den Rollen 13 wegweisenden Seite offenes Kastenprofil ausgebildet, in dem der Getriebemotor 20 aufgenommen ist. Außenseitig ist das Kastenprofil mittels einer leicht abnehmbaren Abdeckung 34 verschlossen und dadurch der Getriebemotor 20 in einem nach außen gekapselten Raum aufgenommen. Die elektrischen Versorgungsleitungen für den Antriebsmotor 21 des Getriebemotors 20 sind ebenfalls in verdeckter Lage innerhalb des gekapselten Raumes entlanggeführt.

## Patentansprüche

1. Rollenförderbahn mit im Abstand voneinander verlaufenden Seitenwangen und zwischen diesen in Förderrichtung aufeinanderfolgend angeordneten Rollen, die beidendig mittels sich stirnseitig in letztere hineinerstreckender Lagerzapfen drehbar gelagert und motorisch angetrieben sind, **wobei** wenigstens eine Rolle mit einem außerhalb der eigentlichen Rollenbahn an einer Seitenwange angeordneten Antriebsmotor über ein Getriebe in Antriebsverbindung steht,
**dadurch gekennzeichnet, daß**
es sich bei dem die angetriebene Rolle (13) antriebsseitig lagernden Lagerzapfen um eine stirnendig in die Rolle (13) hineinragende und mit dieser drehfest verbundene Ausgangswelle (24) des Getriebes (22) handelt, **und daß** die Antriebsverbindung zwischen dem Getriebe (22) und der angetriebenen Rolle (13) eine Winkelund/oder Axialfehler ausgleichende Kupplung (25) umfaßt.

2. Rollenförderbahn nach Anspruch 1, **dadurch gekennzeichnet, daß** die Kupplung (25) aus einer am antriebsseitigen Stirnende dreh- und axialfest in der Rolle (13) aufgenommene Kupplungshülse (26) mit einer Innenverzahnung (28) und einem mit der Getriebe-Ausgangswelle (24) dreh- und axialfest verbundenen Nabenteil besteht, das eine in die Innenverzahnung (28) der Kupplungshülse (26) formschlüssig eingreifende Außenverzahnung (32) besitzt.

3. Rollenförderbahn nach Anspruch 2, **dadurch gekennzeichnet, daß** die Kupplungshülse (26) stirnendig in die rohrartig ausgebildete Rolle (13) eingepreßt ist.

4. Rollenförderbahn nach Anspruche **2** oder **3, dadurch gekennzeichnet, daß** die Außenverzahnung (32) des Nabenteils (27) der Kupplung (25) ballig ausgebildet ist.

5. Rollenförderbahn nach einem der Ansprüche 2 bis 4, **dadurch gekennzeichnet, daß** die axiale Erstreckung des Nabenteils (27) kleiner ist als die der Kupplungshülse (26).

6. Rollenförderbahn nach **einem der Ansprüche 1 bis 5, dadurch gekennzeichnet, daß** die antriebsseitige Seitenwange (12) als nach der von den Rollen (13) wegweisenden Seite offenes Kastenprofil ausgebildet ist und daß der Antriebsmotor (21) und das Getriebe (22) innerhalb des Kastenprofils aufgenommen sind.

7. Rollenförderbahn nach Anspruch **6, dadurch gekennzeichnet, daß** die Offenseite der als Kastenprofil ausgebildeten Seitenwange (12) mittels einer äußeren Abdeckung (34) verschlossen ist und demgemäß der Antriebsmotor (21) und das Getriebe (22) in einem nach außen gekapselten Raum aufgenommen sind.

8. Rollenförderbahn nach einem der Ansprüche 1 bis 7, **dadurch gekennzeichnet, daß** der Antriebsmotor (21) und das Getriebe (22) zu einem kompakt bauenden Getriebemotor (20) zusammengefaßt sind.

9. Rollenförderbahn nach einem der Ansprüche 1 bis **8, dadurch gekennzeichnet, daß** mit der motorisch direkt angetriebenen Rolle (13) die motorisch nicht unmittelbar angetriebenen Rollen (13) über Umschlingungstriebe (15, 15') in Antriebsverbindung stehen.

10. Rollenförderbahn nach Anspruch **9, dadurch gekennzeichnet, daß** die Rollen (13) in der Nähe eines Stirnendes jeweils zwei umlaufende und axial voneinander beabstandete Sicken (16, 16') aufweisen, und daß in diesen Sikken geführte Rundriemen, Zahnriemen oder dergleichen eine Drehverbindung zur jeweils benachbarten Rolle (13) vermitteln.

## Claims

1. Roller conveyor path with side cheeks, which extend at a spacing from one another, and motor-driven rollers, which are arranged in succession between these in conveying direction and which are rotatably mounted at both ends by means of bearing pins extending at the end faces into the rollers, wherein at least one roller is disposed in drive connection by way of a transmission with a drive motor arranged at a side cheek outside the actual roller path, **characterised in that** the bearing pins mounting the driven roller (13) at the drive end is an output shaft (24), which projects at an end face into the roller (13) and is connected therewith to be secure against relative rotation, of the transmission (22) and that the drive connection between the transmission (22) and the driven roller (13) comprises a coupling (24) compensating for error in angle and/or axial error.

2. Roller conveyor path according to claim 1, **characterised in that** the coupling (25) consists of a coupling sleeve (26), which is received in rotationally fixed and axially fixed manner in the roller (13) at the end face at the drive side, with an internal toothing (28) and a hub part connected in rotationally and axially fixed manner with the transmission output shaft (24) and which has an external toothing (32) engaging in mechanically positive manner in the internal toothing (28) of the coupling sleeve (26).

3. Roller conveyor path according to claim 2, **characterised in that** the coupling sleeve (26) is pressed at the end face into the roller (13) of tubular construction.

4. Roller conveyor path according to claim 2 or 3, **characterised in that** the external toothing (32) of the hub path (27) of the coupling (25) is formed spherically.

5. Roller conveyor path according to one of claims 2 to 4, **characterised in that** the axial length of the hub part (27) is less than that of the coupling sleeve (26).

6. Roller conveyor path according to one of claims 1 to 5, **characterised in that** the side cheek (12) at the drive side is constructed as a box profile open towards the side facing away from the rollers (13) and that the drive motor (21) and the transmission (22) are received within the box profile.

7. Roller conveyor path according to claim 6, **characterised in that** the open side of the side cheek (12) constructed as a box profile is closed by means of an outer cover (34) and accordingly the drive motor (21) and the transmission (22) are received in a space covered towards the outside.

8. Roller conveyor path according to one of claims 1 to 7, **characterised in that** the drive motor (21) and the transmission (22) are combined into a motor-transmission (20) of compact construction.

9. Roller conveyor path according to one of claims 1 to 8, **characterised in that** the rollers (13) which are not directly motor-driven are disposed in drive connection with the directly motor-driven roller (13) by way of belt drives (15, 15').

10. Roller conveyor path according to claim 9, **characterised in that** the rollers (13) each have in the vicinity of an end face two encircling and axially spaced-apart creases (16, 16') and that round belts, cogged belts or the like guided in these creases produce a rotary connection to the respectively adjacent roller (13).

## Revendications

1. Transporteur à rouleaux avec des joues latérales s'étendant à une distance l'une de l'autre et entre celles-ci, des rouleaux disposés les uns à la suite des autres dans la direction de convoyage, qui sont logés d'une manière tournante aux deux extrémités au moyen de tourillons s'étendant au côté frontal dans ces derniers et sont entraînés par moteur, où au moins un rouleau est en liaison d'entraînement par un engrenage avec un moteur d'entraînement disposé à l'extérieur de la bande de rouleaux proprement dite à une joue latérale, **caractérisé en ce que**, dans le cas du tourillon logeant le rouleau mené (13) au côté d'entraînement, il s'agit d'un arbre de sortie (24) de l'engrenage (22) faisant saillie à l'extrémité frontale dans le rouleau (13) et relié d'une manière non tournante à celui-ci, et **en ce que** la liaison d'entraînement entre l'engrenage (22) et le rouleau mené (13) comprend un couplage (25) compensant des défauts angulaires et/ou axiaux.

2. Transporteur à rouleaux selon la revendication 1, **caractérisé en ce que** le couplage (25) est constitué d'un manchon de couplage (26) reçu à l'extrémité frontale côté menant d'une manière non tournante et axialement fixe dans le rouleau (13), avec une denture intérieure (28) et une partie de moyeu reliée à l'arbre de sortie (24) de l'engrenage d'une manière non tournante et axialement fixe, qui possède une denture extérieure (32) s'engageant par concordance des formes dans la denture intérieure (28) du manchon de couplage (26).

3. Transporteur à rouleaux selon la revendication 2, **caractérisé en ce que** le manchon de couplage (26) est enfoncé à l'extrémité frontale dans le rouleau (13) réalisé en forme de tube.

4. Transporteur à rouleaux selon la revendication 2 ou 3, **caractérisé en ce que** la denture extérieure (32) de la partie de moyeu (27) du couplage (25) est réalisée d'une manière bombée.

5. Transporteur à rouleaux selon l'une des revendications 2 à 4, **caractérisé en ce que** l'extension axiale de la partie de moyeu (27) est plus petite que celle du manchon de couplage (26).

6. Transporteur à rouleaux selon l'une des revendications 1 à 5, **caractérisé en ce que** la joue latérale (12) côté entraînement est réalisée comme profilé en caisson ouvert au côté éloigné des rouleaux (13), et **en ce que** le moteur d'entraînement (21) et l'engrenage (22) sont reçus à l'intérieur du profilé en caisson.

7. Transporteur à rouleaux selon la revendication 6, **caractérisé en ce que** le côté ouvert de la joue latérale (12) réalisée sous forme de profilé en caisson est fermé au moyen d'un recouvrement extérieur (34) et que par conséquent, le moteur d'entraînement (21) et l'engrenage (22) sont reçus dans une pièce capsulée vers l'extérieur.

8. Transporteur à rouleaux selon l'une des revendications 1 à 7, **caractérisé en ce que** le moteur d'entraînement (21) et l'engrenage (22) sont réunis en un moteur à engrenage (20) d'une construction compacte.

9. Transporteur à rouleaux selon l'une des revendications 1 à 8, **caractérisé en ce que** les rouleaux (13) non entraînés directement par le moteur sont en liaison d'entraînement par des commandes d'enroulement (15, 15') avec le rouleau (13) entraîné directement par moteur.

10. Transporteur à rouleaux selon la revendication 9, **caractérisé en ce que** les rouleaux (13) présentent au voisinage d'une extrémité frontale respectivement deux rainures (16, 16') s'étendant tout autour et espacées axialement l'une de l'autre et **en ce que** des courroies rondes, courroies dentées ou analogues guidées dans ces rainures réalisent une liaison de rotation avec le rouleau respectivement avoisinant (13).
